# EUROPEAN PATENT APPLICATION

(11) **EP 3 466 651 A1**
(43) Date of publication of application: **10.04.2019**
(21) Application number: 17194826.8
(22) Date of filing: 04.10.2017
(51) Int. Cl.: B29C 64/40, B29C 64/153, B33Y 10/00

(54) **METHOD FOR OPERATING AT LEAST ONE APPARATUS FOR ADDITIVELY MANUFACTURING THREE-DIMENSIONAL OBJECTS**

(71) Applicant: CL Schutzrechtsverwaltungs GmbH, 96215 Lichtenfels (DE)
(72) Inventor: Dr. Pontiller-Schymura, Peter, 95512 Neudrossenfeld (DE); Dr. Eichenberg, Boris, 96215 Lichtenfels (DE); Schödel, Frank, 96317 Kronach (DE)
(74) Representative: Hafner & Kohl

(57) **Abstract**

Method for operating at least one apparatus (1) for additively manufacturing three-dimensional objects (2) by means of successive layerwise selective irradiation and consolidation of layers of a build material (3) which can be consolidated by means of an energy beam (4), wherein at least one wall region (8, 11, 12) is built, limiting at least one, in particular chamber-like, build region (9) in the build plane (6), wherein the object (2) is built in the build region (9), wherein at least one support structure (10, 14 - 20) is additively built in the build region (9) via the energy beam (4), which support structure (10, 14 - 20) extends at least partly between the wall region (8, 11, 12) and at least one object (2) that is being built in the build region (9).

## Description

The invention relates to a method for operating at least one apparatus for additively manufacturing three-dimensional objects by means of successive layerwise selective irradiation and consolidation of layers of a build material which can be consolidated by means of an energy beam, wherein at least one, in particular chamber-like, wall region is built, limiting at least one build region in the build plane, wherein the object is built in the build region.

Such apparatuses and the respective methods for operation the same are generally known in prior art. Typically, build material is applied onto a build plate located in a build chamber of the apparatus, for example the build material is applied via a coater, wherein a top layer (or several top layers the energy beam affects) of the applied build material form the build plane which can be directly irradiated via the energy beam. By successively coating and irradiating the respective layers, the object is built.

Based on the constant search for ways to manufacture larger objects or objects with greater variance of diameters or dimensions, build chambers of apparatuses constantly are built or constructed larger to enable manufacturing of larger objects, especially in one piece. Such large build chambers and also large build planes are not used in the manufacturing process of every object so that a significant amount of build material remains nonconsolidated, if the object to be manufactured is far smaller than the entire build plane. Hence, build material that is not consolidated during the manufacturing process is wasted or has to be recycled.

For this reason, it is known to limit the entire available build plane to a build region in which the object is built. The respective build region is limited by at least one wall region separating the build region from the rest of the available build plane on which build material could be applied. This allows for an application of build material only in the build region. The respective wall regions are typically built together with the object in that the wall region houses the volume of build material the three-dimensional object is being built in. Thus, build material can also be applied in the wall region or upon the last layer of build material forming the wall region.

Besides or additional to the search for ways to build larger objects there is an endeavour in prior art for manufacturing objects comprising more filigree structures. It is an object to the present invention to provide an improved method for operating an apparatus for additively manufacturing of three-dimensional objects.

The object is inventively achieved by an apparatus according to claim 1. Advantageous embodiments of the invention are subject to the dependent claims.

The method described herein can be performed on an apparatus for additively manufacturing three-dimensional objects, e.g. technical components, by means of successive layerwise selective irradiation and consolidation of layers of a powdered build material ("build material") which can be consolidated by means of an energy beam. A respective build material can be a metal, ceramic or polymer powder. A respective energy beam can be a laser beam or an electronic beam. A respective apparatus can be a selective laser sintering apparatus, a selective laser melting apparatus or a selective electron beam melting apparatus, for instance.

The respective apparatus the method can be performed on may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The invention is based on the idea that at least one support structure is additively built in the build region via the energy beam, which support structure extends at least partly between the wall region and at least one object that is being built in the build region. It is not necessary that the support structure contacts either the wall region or the object being built. The support structure may be arranged between the wall region and the object being built and adding structural support without direct contact with the wall region or the object. In other words, the support structure may comprise any shape or be arranged in any arbitrary direction as long as a part, in particular a major part of the support structure, extends between the wall region and the object being built. Thus, the build material inside the build region or inside the chamber-like build region enclosed by the at least one wall region can be supported via the at least one support structure extending at least partly between the wall region and the at least one object that is being built in the build region.

Hence, material movements such as movement of the build material that has not been consolidated in the manufacturing process or movements of the object such as deformations of the object, for example due to the effect of gravity, can be avoided or reduced via the at least one support structure. The at least one support structure therefore, supports the build material and the object being built in the build region by adding structural integrity to the region between the wall region and the object in the build region. The at least one support structure further can be used to hold certain volumes of build material in place as movement of the build material, such as trickle movements, can be avoided or reduced by the support structure holding the certain build material volumes in place.

Therefore, the invention allows for supporting the object being built as well as the powdery build material inside the build region to avoid filigree objects being deformed by the effect of gravity due to their deadweight negatively effecting filigree parts of the object.

According to a first embodiment of the method, at least one support structure is built at least partly extending from the wall region towards the object being built. According to this embodiment, the support structure is additively built in the build region, i.e. the volume the at least one wall region encloses. The support structure extends from the wall region towards the object being built, wherein it is not necessary that the support structure contacts the object being built. In other words, the support structure may comprise any shape or be arranged in any arbitrary direction extending from the wall region towards the object being built.

The arrangement of the support structure, as described above, can also be understood as being arranged dependent on the shape of the object, wherein the support structure may extend essentially perpendicular to a surface of the already built object facing the wall region.

In either of the described cases the support structure allows for supporting the object being built relative to the wall region in that build material between the object and the wall region is supported and held in place by the support structure in that forces affecting the object are transferred into the wall region and therefore, supported by the wall region via the support structure. Of course, the or at least one other support structure may also extend at least partly essentially perpendicular to the build plane or a surface of build material on the build region, respectively. In particular, it is possible to have the support structure contacting the wall region and extending from the wall region towards the object being built. Thus, a fixed connection between the support structure and the wall region is provided which can be used to support build material in the build region and/or the object being built in the build region. By extending from the wall region occurring forces can be transferred directly into the wall region and therefore, are supported by the wall region.

According to another embodiment of the method, at least one support structure is built extending from the object being built towards the wall region. Thus, the support structure is additively built in the build region, i.e. the volume the at least one wall region encloses. The support structure extends from the object that is successively being built in a layerwise manner towards the wall region, wherein it is not necessary that the support structure contacts the wall region. In other words, the support structure may comprise any shape or be arranged in any arbitrary direction as long as a part, in particular a major part of the support structure, extends from the object being built towards the wall region.

The arrangement of the support structure in the above described way can also be understood as being arranged dependent on the shape of the object, wherein the support structure may extend in an arbitrary angle, e.g. essentially perpendicular, to a surface of the already built object and/or also be arranged under an arbitrary angle towards the wall region, e.g. essentially perpendicular to the wall region.

In either of the described cases the support structure allows for supporting the object being built relative to the wall region in that build material between the object and the wall region is supported and held in place via the support structure. Of course, the or at least one other support structure may also extend at least partly essentially perpendicular to the build plane or a surface of build material on the build region, respectively. In particular, it is possible to have the support structure contacting the object and extending from the object towards the wall region. Thus, a fixed connection between the support structure and the object is provided which can be used to support build material in the build region and/or the object being built in the build region relative to the build material.

Further, it is possible to have at least two support structures, wherein one support structure extends from the wall region towards the object and one support structure extends from the object towards the wall region, wherein the free ends of both support structures face each other. Thus, a support of the object relative to the wall region can be further improved.

At least one support structure may further be built extending from the wall region to the object being built, linking the wall region with the object. Thus, the object extends from the wall region to the object being built (or vice versa), wherein the support structure generates a direct link between the wall region and the object. Thus, the object is directly supported by the wall region via the support structure, wherein occurring forces affecting the object are transferred to the wall region via the support structure. Thus, a movement of the object, in particular a movement relative to the build plate or the wall region, can be reduced or avoided as the relative position of the object relative to the wall region is fixated by the at least one support structure holding the object in place relative to the wall region. Additionally, build material can be held in place via the support structure directly linking the wall region with the object being built in that movements of the build material, such as trickle movements, can be avoided or reduced.

The shape of the support structure can generally be arbitrarily chosen, for example, at least one support structure may be built strut-like or as a strut. Therefore, the support structure may be arranged and/or shaped in that build material and/or the object are supported. The strut-like shape or the support structure being built as a strut allows for a defined supporting properties of the support structure.

According to another embodiment of the method, at least one support structure is built extending at least partly along the wall region and/or in circumferential direction, in particular at least one support structure is at least partly built as arc or arched and/or at least one support structure is at least partly built as disc or disc-shaped. Thus, the support structure may extend in circumferential direction covering a wider angular area of the build region, wherein the support structure may in particular be adapted to hold build material in place to support the object being built. Generally, the object can be supported directly via a direct support, for example a support structure linking the object with, for example, the wall region. Besides, an indirect support is possible, for example by having a support structure holding build material in place that supports the object.

This embodiment allows for support structures having specific shapes, in particular adapted to hold build material, such as a bowl or basket shape, wherein the support structures may also be shaped as a grid, for example a grid basket.

As already described above, the at least one support structure may generally comprise any arbitrary shape, in particular it is possible to have at least one support structure built comprising at least one curved section and/or at least one branch. Therefore, the support structures may be constructed or built regarding an estimated or calculated flow of forces into the support structure or estimated or calculated forces transferred via the support structure, for example into the wall region. The at least one curved section can further improve the at least one support structure in terms of holding non-consolidated build material in place, for example by forming small bowls or baskets that contain and hold build material. Also, the angle under which the at least one support structure is arranged, for example relative to the build plane, can be chosen arbitrarily. Advantageously, at least one support structure is sloped, e.g. ascending towards the object.

As described before, an arbitrary combination of curved sections is possible, in particular a zig-zag-shape. Of course, the combination of curved sections and/or branched sections can be arbitrarily combined with the arrangement and/or the shape of an individual support structure.

By having at least one support structure comprising at least one section with a branch, it is possible to branch the support structure and thereby have multiple sub-regions inside the build region the support structure can affect. The curvature and/or the branching of the support structure may be chosen regarding the specific shape of the object being built. Further, it is possible to have at least one support structure with self-bracing properties. Hence, at least one part of the at least one support structure braces itself or at least one other part of the same support structure.

According to another embodiment of the method, at least two support structures are built in a defined distance, in particular in build direction, preferably dependent on a number of layers between the two support structures and/or height dependent and/or dependent on a shape of the object being built. Thus, multiple support structures may be provided in build direction, i.e. a direction essentially perpendicular to the build plane or the applied layers of build matieral, respectively, wherein in the successive manufacturing process at least two support structures are built, for example in a defined distance. Thus, a distance can be defined after which the next support structure is additively built in the build region. It is also possible to define a number of layers after which another support structure is built, i.e. the number of layers between two support structures is defined.

The number of support structures being provided in the manufacturing process can further be height dependent and/or dependent on a shape of the object being built. In particular by considering the shape of the object, regions of the object that are more filigree can be supported via more support structures compared to less filigree regions of the three-dimensional object.

To simplify the removal of support structures, in particular support structures that are directly linked with the built object, at least one support structure is built comprising at least one defined breaking region for separating the built object from the at least one support structure. Therefore, at least one support structure with at least one defined breaking region is provided to make the unpacking or the handling, respectively, of the built object easier in that support structures, especially ones that are directly linked to the built object, can be removed easier via the defined breaking region.

It is also possible to have multiple breaking regions to allow for an improved removal of the built object, for example by first breaking the connection to the wall region and removing the object from the build chamber with the support structures still attached to the object. Subsequently, the defined breaking regions linking the support structure with the object can be broken to remove the support structures from the object.

According to another embodiment of the method, at least two wall regions are built, wherein the build region is enclosed between the two wall regions. Hence, two wall regions are provided limiting the build region, wherein, in particular an inner wall region can be provided, defining an inner diameter of the build region. Also, an outer wall region can be provided, defining an outer diameter of the build region. Thus, the build region is chamber-like enclosed by the two wall regions. Having two wall regions, for example annular wall regions, is especially advantageous regarding manufacturing of hollow objects, e.g. rotational symmetric objects.

Further, at least one wall region may itself be supported by a support structure in that at least one support structure is built extending away from a side of the wall region, e.g. facing away from the object being built. Thus, the respective support structure may support the wall region, in particular linking the wall region with a build plate the build material is applied on or a previously built layer of build material. The respective support structures supporting the wall regions may be provided with an inner wall region as well as an outer wall region. It is particularly possible to have the said support structure facing away from the wall region towards the object, i.e. arrange the support structure supporting the wall region in the build region or facing away from the object, i.e. arrange the support structure outside the build region.

Besides, the invention relates to an apparatus for additively manufacturing of three-dimensional objects by means of successive layerwise selective irradiation and consolidation of layers of a build material which can be consolidated by means of at least one energy beam, wherein the apparatus comprises at least one irradiation device adapted to generate the at least one energy beam and adapted to guide the energy beam along an energy beam path extending in a build plane, wherein the irradiation device is adapted to irradiate build material in the build plane in that at least one wall region is built, limiting at least one chamber-like build region of the build plane, wherein the object is built in the build region, wherein the irradiation device is adapted to irradiate build material in the build region of the build plane in that at least one support structure is additively built extending between the wall region and at least one object that is being built in the build region.

The inventive method as described before can be performed on the inventive apparatus. Self-evidently, all features, details and advantages described with respect to the inventive method are fully transferable to the inventive apparatus.

Exemplary embodiments of the invention are described with reference to the Fig. The Fig. are schematic diagrams, wherein
Fig. 1 shows an apparatus according to a first embodiment of the invention;
Fig. 2 shows a top view of an apparatus according to a second embodiment of the invention; and
Fig. 3 shows a cross-section III-III of Fig. 2.

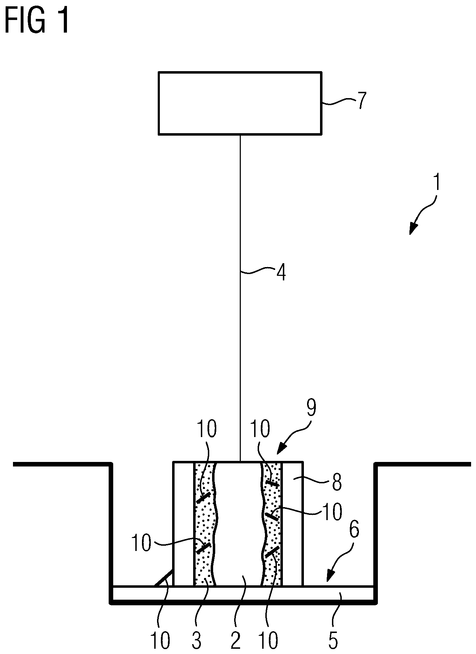

Fig. 1 shows an apparatus 1 for additively manufacturing of three-dimensional objects 2 by means of successive layerwise selective irradiation and consolidation of layers of a build material 3 which can be consolidated by means of at least one energy beam 4. For the sake of convenience only non-consolidated build material 3 is indicated with the reference sign 3, of course, the built object 2 is also build from build material 3 by irradiating and consolidating the build material 3 in a layerwise manner.

The object 2 and the build material 3 are arranged on a build plate 5 of the apparatus 1, wherein the build plate 5 defines a build plane 6. Generally, the entire build plane 6 is available in that build material 3 can be applied onto the build plane 6. For saving of build material 3 when manufacturing three-dimensional objects 2 that are small compared to the size of the entire build plane 6 not the entire build plane 6 is used. Since the object 2 that is currently being built in the manufacturing process as depicted in Fig. 1 does not require the entire build plane 6, a region in which the object 2 is built is limited as will subsequently be described.

The apparatus 1 comprises an irradiation device 7 that is adapted to generate and guide the energy beam 4 in the build plane 6, in particular adapted to guide the energy beam 4 along an energy beam path extending in the build plane 6. Therefore, the energy beam 4 is guided onto the build plane 6, in which build material 3 can directly be irradiated and thereby consolidated. To reduce the volume of build material 3 used to manufacture the object 2 the part of the build plane 6 that is effectively used is reduced, as described before. To achieve the reduction of the used part of the build plane 6 a wall region 8 is built, limiting a chamber-like build region 9 inside which the object 2 is built. The build region 9 therefore, defines the region that is effectively used to irradiate build material 3 and thus, to manufacture the three-dimensional object 2.

Thus, the wall region 8 houses a volume of build material 3 that can be directly irradiated with the energy beam 4. In other words, build material 3 is applied onto the build plane 6 only in an area defined by the wall region 8 in that the wall region 8 is successively built together with the object 2. Hence, the amount of build material 3 that is and remains non-consolidated throughout the manufacturing process can be reduced as not the entire build plane 6 is coated with build material 3, but the build region 9 limited by the wall region 8 is reduced in size and therefore, is smaller than the entire build plane 6.

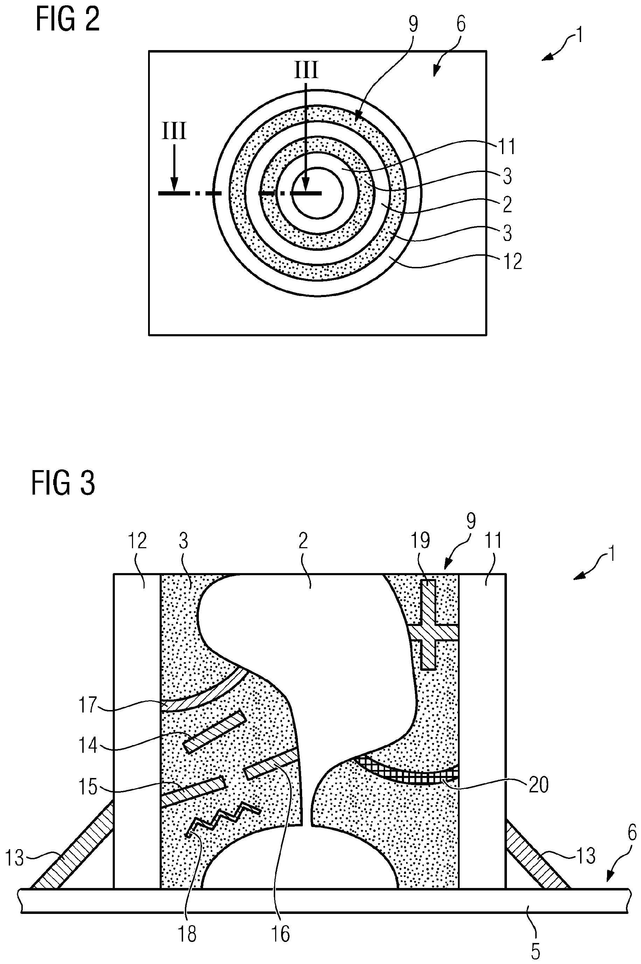

To provide sufficient support of the object 2 build material 3 can be irradiated in that support structures 10 are built supporting the non-consolidated build material 3 and the object 2 inside the build region 9. Further details of the additively built support structures 10 are described below with respect to Fig. 3.

Fig. 2 shows a top view of an apparatus 1 according to a second embodiment of the invention. As the apparatus 1 generally is built analog to the apparatus 1 depicted in Fig. 1 same numerals are used for same parts.

The apparatus 1 depicted in Fig. 2 therefore, also shows a build plane 6 in top view, on which an object 2 is being manufactured. To limit the build region 9 two wall regions 11, 12 are additively built together with the object 2. Thus, the wall region 11 essentially comprises an annular shape, wherein the wall region 11 can also be regarded as an inner wall region defining an inner diameter of the build region 9, whereas the wall region 12 also essentially comprises an annular shape and can be regarded as an outer wall region defining an outer diameter of the build region 9. In other words the wall regions 11, 12 limit the build region 9, thereby chamber-like enclosing a volume of build material 3.

The wall regions 11, 12 are successively built together with the object 2 by successively applying layers of build material 3 and selectively irradiating the applied layers of build material 3. As can be derived from Fig. 2, build material 3 can be saved as not the entire build plane 6 has to be coated with build material 3 but only a smaller volume of build material 3 is used that is defined by the wall regions 11, 12.

Fig. 3 shows an exemplary cross-section III-III of Fig. 2. As can be derived from Fig. 3, the object 2 is being built inside the build region 9, wherein multiple support structures 10 are additively built in the manufacturing process to support the object 2 and the build material 3 inside the build region 9. Further, two support structures 13 are manufactured supporting the wall regions 11, 12 by transferring forces induced by the object 2 and the build material 3 inside the build region 9 onto the wall regions 11, 12 into the build plate 5.

Fig. 3 further shows a support structure 14 that is built extending between the wall region 12 and the object 2. Forces induced by the object 2 onto the build material 3 arranged between the object 2 and the wall region 12 can therefore, be received by the support structure 14. As can be derived from Fig. 3, the support structure 14 comprises a strut-like shape.

Further, a support structure 15 is built that extends from the wall region 12 towards the object 2, wherein the support structure 15 is directly linked with the wall region 12. In line with the support structure 15 a support structure 16 is built that extends from the object 2 towards the wall region 12, wherein the support structures 15, 16, in particular the free ends of the support structures 15, 16, face each other.

Fig. 3 shows another support structure 17 that circumferentially extends around the object 2, wherein the support structure 17 is curved to provide a reception room for build material 3 and assure the support of the object 2 relative to the wall region 12. The support structure 17 may, for example, extend angularly around the object 2, for example entirely around the object 2 or over a defined angular area, for example 90°. Another support structure 18 comprises a zig-zag-shape providing multiple reception rooms for build material 3 in that the build material 3 received in or supported by the support structure 18 can be held in place.

On the other side of the object 2, i.e. between the object 2 and the wall region 11 two support structures 19, 20 are additively built, wherein the support structure 19 comprises a cross-like cross-section, partly extending parallel to the build plane 6 and partly extending perpendicular to the build plane 6.

The support structure 20 comprises a grid-shape, wherein the support structure 20 is curved in that the support structure 20 forms a grid-basket. The support structure 20 is adapted to receive build material 3 and thereby support the object 2 on the wall region 11.

Of course, all support structures 10, 14 to 20 can comprise defined breaking regions, in particular located towards the object 2 and/or towards the wall regions 11, 12. The support structures 10, 14 to 20 are only exemplary so that the arrangement, the shape, the orientation and the like can arbitrarily changed, in particular the features of individual support structures 10, 14 to 20 shown in the Fig. can arbitrarily combined. Self-evidently, the inventive method can be performed on the apparatus 1 as shown in the Fig. 1 to 3.

## Claims

1. Method for operating at least one apparatus (1) for additively manufacturing three-dimensional objects (2) by means of successive layerwise selective irradiation and consolidation of layers of a build material (3) which can be consolidated by means of an energy beam (4), wherein at least one wall region (8, 11, 12) is built, limiting at least one, in particular chamber-like, build region (9) in the build plane (6), wherein the object (2) is built in the build region (9), **characterized in that** at least one support structure (10, 14 - 20) is additively built in the build region (9) via the energy beam (4), which support structure (10, 14 - 20) extends at least partly between the wall region (8, 11, 12) and at least one object (2) that is being built in the build region (9).

2. Method according to claim 1, **characterized in that** at least one support structure (10, 14 - 20) is built at least partly extending from the wall region (8, 11, 12) towards the object (2) being built.

3. Method according to claim 1 or 2, **characterized in that** at least one support structure (10, 14 - 20) is built extending from the object (2) being built towards the wall region (8, 11, 12).

4. Method according to one of the preceding claims, **characterized in that** at least one support structure (10, 14 - 20) is built extending from the wall region (8, 11, 12) to the object (2) being built, linking the wall region (8, 11, 12) with the object (2).

5. Method according to one of the preceding claims, **characterized in that** at least one support structure (10, 14 - 20) is built strut-like or as a strut.

6. Method according to one of the preceding claims, **characterized in that** at least one support structure (10, 14 - 20) is built extending at least partly along the wall region (8, 11, 12) and/or in circumferential direction, in particular at least one support structure (10, 14 - 20) is at least partly built as arc or arched and/or at least one support structure (10, 14 - 20) is at least partly built as disc or disc-shaped.

7. Method according to one of the preceding claims, **characterized in that** at least one support structure (10, 14 - 20) is built comprising at least one curved section and/or at least one branch.

8. Method according to one of the preceding claims, **characterized in that** at least two support structures (10, 14 - 20) are built in a defined distance, in particular dependent on a number of layers between the two support structures (10, 14 - 20) and/or height dependent and/or dependent on a shape of the object (2) being built.

9. Method according to one of the preceding claims, **characterized in that** at least one support structure (10, 14 - 20) is built comprising at least one defined breaking region for separating the built object (2) from the at least one support structure (10, 14 - 20).

10. Method according to one of the preceding claims, **characterized in that** at least two wall regions (8, 11, 12) are built, wherein the build region (9) is enclosed between the two wall regions (8, 11, 12).

11. Method according to one of the preceding claims, **characterized in that** at least one support structure (10, 14 - 20) is built extending away from a side of the wall region (8, 11, 12) facing away from the object (2) being built.

12. Apparatus (1) for additively manufacturing of three-dimensional objects (2) by means of successive layerwise selective irradiation and consolidation of layers of a build material (3) which can be consolidated by means of at least one energy beam (4), wherein the apparatus (1) comprises at least one irradiation device adapted to generate the at least one energy beam (4) and adapted to guide the energy beam (4) along an energy beam (4) path extending in a build plane (6), wherein the irradiation device is adapted to irradiate build material (3) in the build plane (6) in that at least one wall region (8, 11, 12) is built, limiting at least one chamber-like build region (9) of the build plane (6), wherein the object (2) is built in the build region (9), **characterized in that** the irradiation device is adapted to irradiate build material (3) in the build region (9) of the build plane (6) **in that** at least one support structure (10, 14 - 20) is additively built extending between the wall region (8, 11, 12) and at least one object (2) that is being built in the build region (9).

13. Apparatus (1) according to claim 12, **characterized in that** the apparatus (1) is adapted to perform the method according one of the claims 1 to 11.
